# EUROPEAN PATENT SPECIFICATION

(11) **EP 0 967 584 B1**
(45) Date of publication and mention of the grant of the patent: **20.10.2004**
(21) Application number: 99201370.6
(22) Date of filing: 29.04.1999
(51) Int. Cl.: G08B 13/194, G08B 15/00

(54) **Automatic video monitoring system**
Automatische Videoüberwachungsanlage
Système automatique de surveillance vidéo

(30) Priority: 30.04.1998 US 83644 P; 29.06.1998 US 91263 P; 30.04.1998 US 83711 P; 30.04.1998 US 83718 P
(43) Date of publication of application: 29.12.1999
(73) Proprietor: TEXAS INSTRUMENTS INCORPORATED, Dallas, TX 75265 (US)
(72) Inventor: Courtney, Jonathan D., Richardson, TX (US)
(74) Representative: Holt, Michael

(56) References cited:
- WO-A-95/24702
- CA-A- 1 045 732
- VTT: "MVQ video communicator" [Online] , FINLAND. RETRIEVED ON THE INTERNET XP002149265 Retrieved from the Internet: <URL: http://www.vtt.fi/tte/samba/projects/mvq> [retrieved on 2000-10-04] * the whole document *
- PATENT ABSTRACTS OF JAPAN vol. 1995, no. 11, 26 December 1995 (1995-12-26) & JP 07 220047 A (OKI ELECTRIC IND CO LTD), 18 August 1995 (1995-08-18)
- PATENT ABSTRACTS OF JAPAN vol. 1995, no. 11, 26 December 1995 (1995-12-26) & JP 07 220046 A (OKI ELECTRIC IND CO LTD), 18 August 1995 (1995-08-18)

## Description

### TECHNICAL FIELD OF THE INVENTION

This invention relates in general to monitoring systems and, more particularly, to a method for mapping the physical position of an object from a video image to a map of a monitored area.

### BACKGROUND OF THE INVENTION

A surveillance or monitoring system may include a video camera which generates images of a monitored area or region, and a computer which receives and processes the images from the video camera. The computer includes a digitized map, and monitors the detected video images in order to determine the presence in the monitored area of an object of interest, such as a human. When an object of interest is identified through analysis of the detected images, the location of the object is mapped from the image to the map.

It is also common to record the output of each camera on a time-lapse video cassette recorder (VCR). In the event of a problem or security incident, the resulting recording can then be examined. It is also possible to use a video or infrared motion detector, so that the VCR does not record anything except when there is motion in the observed area. This reduces the consumption of tape and makes it easier to find footage of interest. Nevertheless, it does not eliminate the need for the VCR, which is a relatively complex and expensive component that is subject to mechanical failure and that requires periodic maintenance, such as cleaning of the video heads. Moreover, infrared motion detectors have a tendency to produce false detections.

Another known approach is to use an all-digital video imaging system, which converts each video image to a compressed digital form immediately upon capture. The digital data is then saved in a conventional database (such as a disk farm backed up by a tape juke box). This approach is relatively expensive, requires a substantial amount of storage space, and does nothing to help an operator find frames of interest.

Another approach uses a video camera and personal computer to detect and track people, and saves the first image that satisfies some alarm condition. However, this system makes no attempt to select a good view of the person, as a result of which the saved image may show the person with his or her back to the camera, rendering it difficult or impossible to identify the particular person. Another known system displays a path of movement of a detected person who is in the observed area, but discards the path of movement after the person leaves the observed area.

WO 95/24702 shows an evaluation system for surveillance camera which extracts objects within surveillance image field to provide signal when defined object features are identified.

All of these known approaches have been generally adequate for their intended purposes, but they have not been satisfactory in all respects. For example, they involve hardware which is relatively expensive and not particularly compact. They often use a VCR, which is subject to mechanical failure and requires periodic maintenance. Some systems store all incoming video information, which uses a substantial amount of storage capacity, and makes it difficult to find of events of interest.

This known system includes a computer-aided drafting (CAD) model of the environment or monitored area, which serves as the basis for the map. Further, in order to accurately determine the location on the map of an object identified in the detected images, parameters of the camera must be determined, and must be introduced into the computer. The camera parameters include not only internal parameters such as focal length and the number of millimeters per pixel, but also external parameters such as the location and the orientation of the camera.

When this known system is in operation, the location on the map of an object in a video image is determined using a formula derived by inverting equations that describe image formation geometry. The necessary set up and initialization for this system is complex and time consuming. Determining all of the pertinent internal and external parameters of the camera, and entering them into the computer system, is a complex and time-consuming task. Also, preparing the CAD model of the monitored area can be a slow and time-consuming task.

In addition, even if care is exercised in the determination of the camera parameters and the preparation of the CAD model, errors can still occur. For example, an object which is visible to the camera, because it is on a side of a wall nearest the camera, may be incorrectly positioned on the map on the opposite side of that wall, where it would not actually be visible to the camera. Errors of this type become even more problematic if the camera parameters and CAD model are not carefully established.

There are now video cameras which can be coupled to a computer, and there are software programs capable of converting video images from such cameras into a document in hypertext mark-up language (HTML) format, or in other words a document compatible with the Internet standard known as the World Wide Web (WWW). Further, personal communication devices such as cellular phones, pagers and personal digital assistants are becoming increasingly popular commercial products, as wireless communication technology becomes widespread and affordable. In fact, there is now a portable phone which has a small video display, and which includes a WWW-compatible browser that permits the portable unit to download and display HTML documents from the Internet.

At the same time, home security systems have become more common. However, even the most sophisticated home security systems are limited by rudimentary provisions for remote access by the property owner. Further, false alarms are relatively common. Even if the owner is made aware of the alarm, there is no convenient and cost-effective way for the owner to determine whether it is a false alarm. For example, existing systems may notify an owner of a possible break-in or other event through an automated phone call or page message, but the owner has no way of verifying whether there is a real problem or merely a false alarm.

While these existing monitoring systems have been generally adequate for their intended purposes, they have not been satisfactory in all respects. For example, and as mentioned above, even if an owner is notified by a page or telephone call of a problem or other event of interest, there is no convenient way for the owner to determine whether the event represents a true problem or just a false alarm, still less from virtually any remote location. Further, existing systems do not allow the camera operation to be adjusted from virtually any remote location.

### SUMMARY OF THE INVENTION

From the foregoing, it may be appreciated that a need has arisen in the automatic monitoring field for a method which is reliable, and which intelligently saves selected information that is meaningful but minimizes storage capacity.

According to a preferred embodiment of the present invention, a method is provided to address this need, and involves periodically detecting an image of the area, subtracting each detected image from a reference image, identifying a moving object by processing each change region where a current detected image differs from the reference image and defining an object image as a portion of the current detected image corresponding to each identified moving object. The method is characterized in that it further comprises: upon first identification of a moving object, saving the object image corresponding to the detected moving object; and for each subsequent detected image, automatically selecting a prior object image or a current object image of each detected moving object using selection criteria, saving the selected object image of each identified object, and discarding the non-selected object image of each identified moving object whereby a single object image of each corresponding moving object is saved.

Preferably, an object image of an identified object is defined as a bounding box just large enough to include the corresponding change region, wherein said selection criteria selects one of the prior object image or current object image whose bounding box has a lower side lower in said detected image. Alternatively, said selection criteria selects one of the prior object image or current object image having a larger size bounding box if the lower side of the bounding box of the prior object image is equally as low as the lower side of the bounding box of the current object image.

In another embodiment, said selection criteria selects one of the prior object image or current object image having a larger size corresponding change region.

In a further preferred embodiment, path information which identifies the path of movement of each detected moving object is automatically saved, and the method further comprises: retaining the path information and the current selected object image after the moving object is no longer identified in the detected images; and displaying the reference image having a path corresponding to the path information of a selected moving object overlain thereon and the stored object image of the selected moving object overlain thereon at a location corresponding to the moving object location when the stored object image was identified.

### BRIEF DESCRIPTION OF THE DRAWINGS

A better understanding of the present invention will be realized from the detailed description which follows, taken in conjunction with the accompanying drawings, in which:
FIGURE 1 is a diagrammatic view of an automatic monitoring system which embodies the present invention;
FIGUREs 2A, 2B, 2C, 2D, 2E, 2F, 2G and 2H are diagrammatic views of two-dimensional images that represent successive steps carried out by the system of FIGURE 1 when processing images obtained from a video camera;
FIGURE 3 is a motion analysis diagram indicating how the motion of objects in a video image is analyzed by the system of FIGURE 1;
FIGURE 4 is a diagrammatic top view of part of a floor plan of a building in which the system of FIGURE 1 can be utilized;
FIGURE 5 is a diagrammatic view of a reference image provided by the system of FIGURE 1 for the building of FIGURE 4;
FIGURE 6 is a diagrammatic view of a video image which is similar to the image of FIGURE 5, but which shows the presence of a person;
FIGURE 7 is a diagrammatic view of a directory structure which is used on a hard disk drive in the system of FIGURE 1;
FIGURE 8 is a diagrammatic view of a display presented on the screen of a computer monitor which is a component of the system of FIGURE 1;
FIGURE 9 is a diagrammatic view similar to FIGURE 8 of a display presented on the screen of the computer monitor of FIGURE 1;
FIGURE 10 is a diagrammatic top view of part of a floor plan of a building in which the system of FIGURE 1 can be utilized;
FIGURE 11 is a diagrammatic view of a reference video image provided by the system of FIGURE 1 for the building of FIGURE 10;
FIGURE 12 is a diagrammatic view of part of a video display provided by the system of FIGURE 1 to permit a operator to define a mapping function between a detected video image of the monitored area and a map of the monitored area;
FIGURE 13 is a diagrammatic view similar to FIGURE 12 but showing a exemplary display generated by the system of FIGURE 1 during normal operation;
FIGURE 14 is a diagrammatic view of a monitoring apparatus which embodies the present invention, the monitoring apparatus including two video cameras, a system which processes video images from the cameras, and a portable unit which is coupled to the system through a wireless link;
FIGURE 15 is a high-level flowchart of image processing techniques used by the apparatus of FIGURE 14;
FIGURE 16 is a diagrammatic view of an exemplary screen image presented on a display of the portable unit of FIGURE 14;
FIGUREs 17A-17C are respective diagrammatic views of video images, which demonstrate how video images are processed by the apparatus of FIGURE 14;
FIGURE 18 is a diagrammatic view of a region of interest shown in FIGURE 2G, superimposed on a reference image which is shown in FIGURE 2A;
FIGURE 19 is a diagrammatic view of the outline of a the region of interest shown in FIGURE 2G;
FIGURE 20 is a diagrammatic view of the outline of FIGURE 19, superimposed on the reference image which is shown in FIGURE 2A;
FIGURE 21 is a diagrammatic view of a region derived from the image of FIGURE 2B, one part of which includes gray scale information, and a further part of which does not; and
FIGURE 22 is a diagrammatic view representing the differences between two successively detected images.

### DETAILED DESCRIPTION OF THE INVENTION

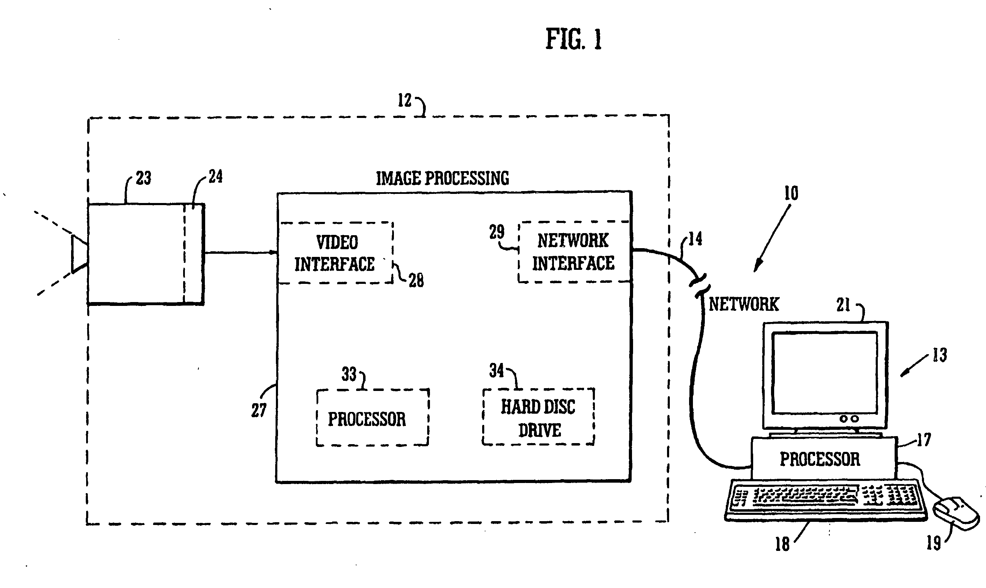

FIGURE 1 is a diagrammatic view of a monitoring system 10 which embodies the present invention, and which is used to monitor activity in a selected region or area. The monitoring system 10 includes a camera unit 12 and a workstation 13, which are operatively coupled through a network shown diagrammatically at 14. The network 14 may be a local area network, the Internet, some other type of network, a modem link, or a combination of such technologies. The workstation 13 may be a personal computer, including a processor 17, a keyboard 18, a mouse 19, and a display 21.

The camera unit 12 includes a video camera 23 which, in the disclosed embodiment, is a monochrome camera. However, the present invention is also suitable for use with a color video camera, or some other type of two-dimensional image detector, such as an infrared detector. Video camera 23 includes a detector 24, which may be a charge coupled device (CCD), or a CMOS image sensor device. The video camera 23 also includes not-illustrated optics of a known type, which focus an image on the detector 24.

The camera unit 12 further includes an image processing section 27. The image processing section 27 includes a video interface circuit 28 which receives the output of the detector 24, and a network interface circuit 29 which facilitates communication across the network 14. The image processing section 27 could also include a modem, in addition to or in place of the interface circuit 29, in order to facilitate communication through telephone lines. The image processing section 27 further includes a processor 33, and a memory such as a hard disk drive 34. The hard disk drive 34 could optionally be replaced with some other type of suitable non-volatile memory, such as a flash memory, or a memory with battery backup.

In the disclosed embodiment, the image processing section 27 is physically disposed within the housing of the camera unit 12. Thus, the camera unit 12 is a standalone device which can coupled directly to a telephone line or a network, such as the network 14. However, it will be recognized that the image processing section 27 could alternatively be implemented with a personal computer which is physically separate from the video camera 23, which has a plug-in video capture card serving as the video interface circuit, and which has a plug-in network interface card serving as the network interface circuit. Further, although the disclosed system has just one video camera 23, it would be possible to use two or more video cameras with a single image processing section.

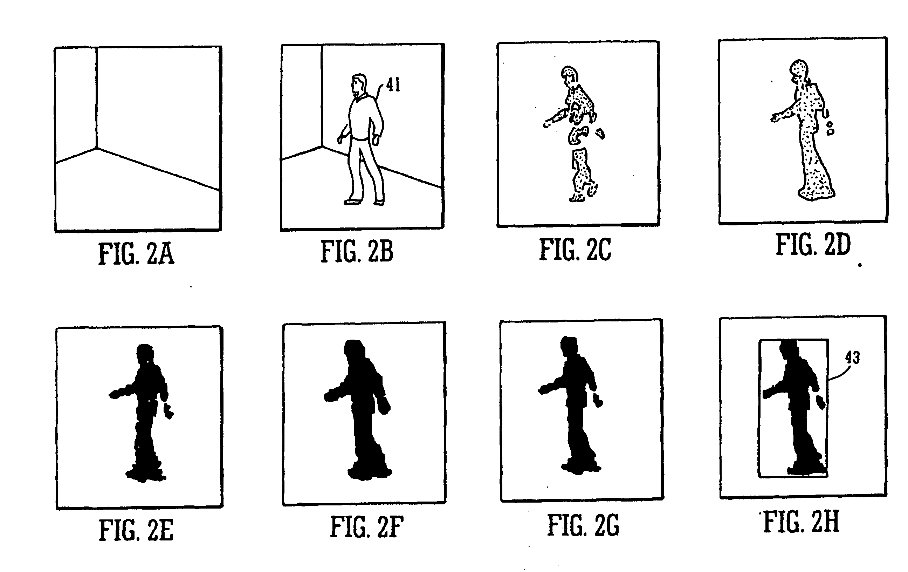

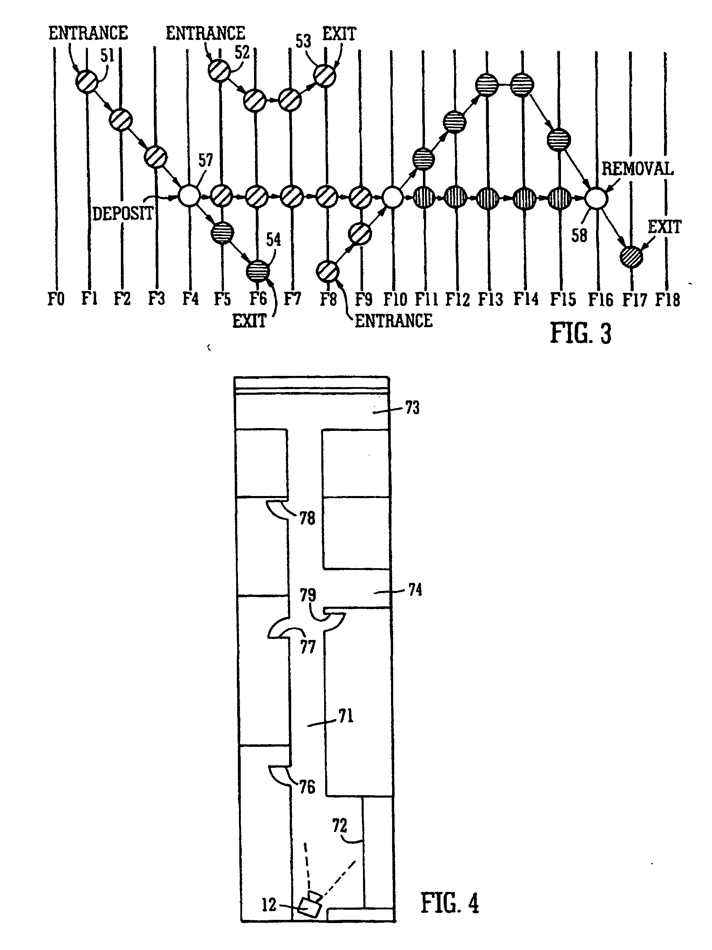

The initial processing of video images by workstation 13 will now be described with reference to FIGUREs 2A-2H and FIGURE 3. More specifically, FIGURE 2A is a diagrammatic view of a video image produced by the video camera 12 when it is directed toward an area which, in this example, has arbitrarily been selected to be the corner of a room. The video image of FIGURE 2A is saved as a reference image. FIGURE 2B is a similar video image that was obtained from the camera 12 at a later point in time, after an object 41 has been introduced into the monitored area. In this case, the object 41 is a person, who has walked into the corner of the room and thus into the field of view of the video camera 12. The video camera 12 is stationary, and thus the single difference between the images of FIGUREs 2A and 2B is the presence of the person 41 in FIGURE 2B. The presence and movement of the person 41 is detected in the following manner.

First, the gray-scale image of FIGURE 2B is subtracted from the gray-scale image of FIGURE 2A, on a pixel-by-pixel basis. The absolute value of the difference for each pixel is then determined, and the result is the gray-scale difference image of FIGURE 2C. Then, the difference image of FIGURE 2C is sub-sampled in order to reduce the number of pixels, for example to a 128 by 128 or 256 by 256 pixel image. The resulting low-resolution image is shown in FIGURE 2D. It will be recognized that it is alternatively possible to sub-sample each of the images of FIGUREs 2A and 2B before determining the difference and absolute value for each pixel, which reduces the number of pixels that need to be processed, and therefore reduces the amount of time needed to obtain the image of FIGURE 2D.

The low-resolution difference image of FIGURE 2D is then thresholded. In other words, the gray-scale value for each pixel in the image of FIGURE 2D is compared to a predetermined threshold, and the pixel is then set to be either on or off (black or white), depending on whether the value is above or below the threshold. The resulting threshold image is shown in FIGURE 2E. Each pixel in the threshold image of FIGURE 2E can be represented by a binary "1" or a binary "0", depending on whether the pixel is considered to be on or off.

Morphological processing is then carried out on each pixel of the threshold image of FIGURE 2E, by first performing a dilate operation, and then performing an erode operation. More specifically, each pixel is processed by viewing it as the center pixel in a three-by-three matrix of pixels. During the dilate operation for each pixel in the threshold image of FIGURE 2E, if any one of the eight neighboring pixels in that image is a logic "1", the pixel of interest is set to a logic "1". The resulting dilate image is shown in FIGURE 2F. During the subsequent erode operation for each pixel in the dilate image of FIGURE 2F, if any one of the eight neighboring pixels in that image is a logic "0", then the pixel of interest is set to a logic "0". The result is the erode image of FIGURE 2G.

The erode image of FIGURE 2G is then analyzed to identify each region of contiguous logic "1" pixels. Each such region of contiguous logic "1" pixels represents a change region, corresponding to an object which has been introduced into the image of FIGURE 2B and which was not present in the image of FIGURE 2A, such as the person 41. This analysis can be carried out using known techniques, such as run-length encoding followed by connected-component analysis.

With respect to each detected change region, the image processing section 27 determines a bounding box for the change region. An example of a bounding box is shown at 43 in FIGURE 2H. It will be noted that the bounding box 43 is a rectangular box, just large enough to contain the entire change region. That is, no pixel of the change region lies outside the box, but every side of the box touches at least one pixel of the change region.

The above-described image processing is carried out for each image in a succession of images provided by the video camera 12. That is, each of these successive images is processed with respect to the reference image of FIGURE 2A, in the same manner that was described above for the image of FIGURE 2B.

The workstation 13 then carries out motion analysis, by tracking movement or non-movement of each identified change region through a succession of the frames or images from the video camera. For purposes of facilitating an understanding of the present invention, one known motion analysis technique will be briefly summarized with reference to FIGURE 3. Although it will be recognized that motion analysis in the video images is carried out in two dimensions, for purposes of convenience the diagram of FIGURE 3 shows just one dimension.

In FIGURE 3, the nineteen vertical lines F0 through F18 each represent a respective frame or image in a series of successive images from the video camera 12. In FIGURE 3, the horizontal dimension represents time, and the vertical dimension represents one dimension of movement of an object within a two-dimensional image. When an object which was not previously present first appears, for example at 51 or 52, it is identified as an "entrance" or "enter" event. When an object which was previously present is found to no longer be present, for example at 53 or 54, it is designated an "exit" event. If an existing object splits into two objects, one of which is moving and the other of which is stationary, for example as at 57, it is designated a "deposit" event. This would occur, for example, when a person who is carrying a briefcase sets it down on a table, and then walks away.

If a moving object merges with a stationary object, and then continues to move while the stationary object disappears, as at 58, it is designated a "remove" event. This would correspond to a situation where a person walks to a notebook resting on a table, and then picks up the notebook and walks away. Three other types of events, which are not specifically illustrated in FIGURE 3, are a "rest" event, a "move" event, and a "lightsout" event. A rest event occurs when a moving object comes to a stop but continues to be present without moving. A practical example is a situation where the objects being monitored are vehicles in a parking lot, and a car pulls into a parking space and thereafter remains stationary. A move event occurs when a detected object which has been stationary begins moving again, for example when a car that has been parked begins moving. A "lightsout" event occurs when the entire detected image suddenly changes, for example when the lights in a monitored room are turned out and the room becomes dark. A "lightsout" event can be detected without all of the image processing described above in association with FIGUREs 2 and 3.

It is optionally possible to also carry out an identification analysis, in an attempt to identify a detected object. For example, with a small amount of knowledge about the topography of the monitored area, the workstation 13 can use the position in the image of the midpoint of the lower side of the object's bounding box in order to identify how far the object is from the camera. Then, knowing how tall a person that far from the camera would be, the workstation 13 can evaluate the vertical height of the bounding box in the image, in order to determine whether the object generating the change region is tall enough to be a person. If the object is sufficiently tall to be a person, it can be assumed that it is a person.

Alternatively, the workstation 13 could map the endpoints of the lower side of a bounding box from an image to a map of the scene viewed. Given the scale of the map, the workstation 13 could determine the distance between these two points on the map, which would also be the distance between them in the image, and would thus be the length of the lower side of the bounding box in the image. The computer could then determine the height of the bounding box in the image, and evaluate whether the object in question is tall enough to be a person. Again, if the object is sufficiently tall to be a person, the workstation 13 assumes that it is a person. This process will be further described below.

If the object is not sufficiently tall to be a person, then the workstation 13 can carry out an object analysis procedure, by analyzing the image of the object in an attempt to classify it as one of several common objects, such as a briefcase, a notebook, a box, or a computer monitor. If the object is not specifically identified through this approach, then it is ultimately identified as an "unknown" object.

In order to facilitate an understanding of one aspect of the present invention, a specific exemplary application for the system 10 of FIGURE 1 will now be disclosed. However, it will be recognized that there are numerous other applications and environments in which the system 10 of FIGURE 1 could be utilized. With respect to the exemplary application, FIGURE 4 is a diagrammatic top view of a portion of a building which has a long hallway 71 with an alcove 72 near one end. The camera unit 12 of FIGURE 1 is stationarily mounted just below the ceiling and at one end of the hallway 71, so that it looks down the hallway 71 and slightly to the right. The camera unit 12 can thus observe the hallway 71 and the alcove 72. At its far end, the hallway 71 dead-ends into a transverse further hallway 73. Yet another transverse hallway 74 extends off to the right from hallway 71, at a location intermediate the alcove 72 and the hallway 73. There are three doors 76, 77 and 78 disposed at spaced locations along the left side of the hallway 71. A single door 79 is provided along the right side of the hallway 71, adjacent the hallway 74 and on a side thereof nearest the camera unit 12.

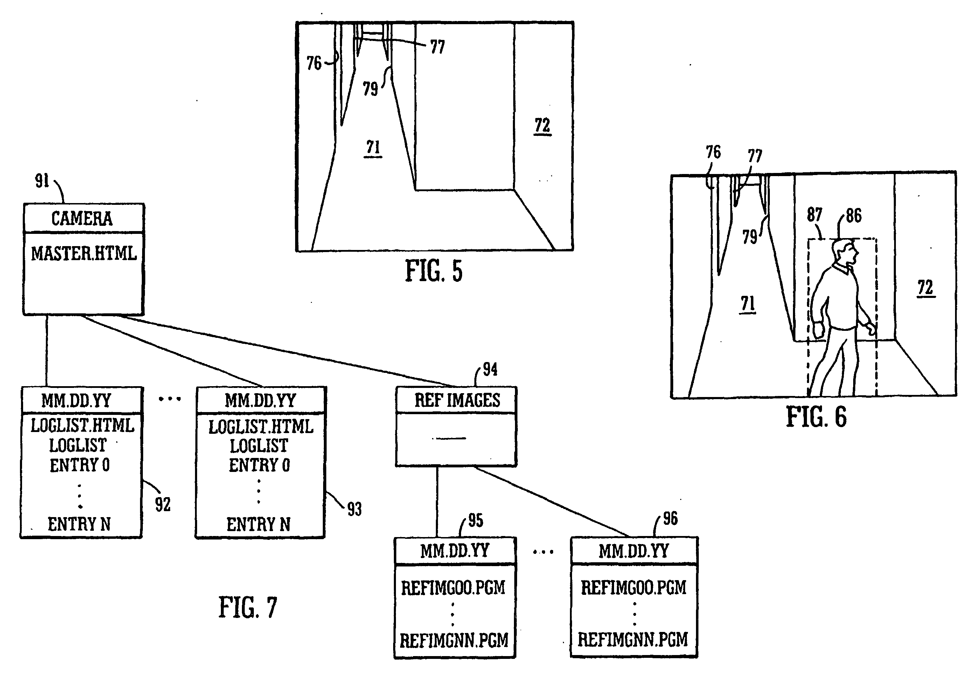

FIGURE 5 is a diagrammatic view of a video image which was obtained from the camera unit 12 in the environment of FIGURE 4, and which thus shows the hallway 71 and the alcove 72. For purposes of discussion, it is assumed that the image of FIGURE 5 has been saved as a reference image, analogous to the reference image discussed above in association with FIGURE 2A. FIGURE 6 is a diagrammatic view of a further video image from the camera unit 12, but after the appearance in the monitored area of an object 86 which was not present in the reference image of FIGURE 5.

In this case, the object 86 is a person, who entered the hallway 71 at the far end, and then walked down the length of the hallway 71 to the alcove 72. After the camera unit generated the video image of FIGURE 6, the person 86 continued down the hallway 71 toward the camera unit 12, and then walked under the camera unit so as to disappear from the field of view of the camera unit. During the time that the person 86 was in the field of view of the camera unit 12, the camera unit generated a succession of video images as the person walked down the hall 71. A selected one of these video images is shown in FIGURE 6. Each of the video images in this succession of images was processed relative to the reference image of FIGURE 5, in a manner analogous to that described above in association with FIGURE 2. In association with the processing of each such image, the system determines for each image a bounding box around the change region which corresponds to the person 86. The bounding box for the person 86 in the image of FIGURE 6 is shown at 87.

The image processing section 27 of FIGURE 1 does not save each of the numerous images of the person 86 which are obtained while the person walks down the hallway 71. While some known systems do this, it requires an extensive amount of memory to store all this video information. Instead, the system 10 stores just selected information, as discussed below.

More specifically, the image processing section 27 has already stored on the hard disk drive 34 the reference image of FIGURE 5. In the disclosed embodiment, the reference image of FIGURE 5 is first sub-sampled, and then the resulting low-resolution version of the image is stored on the hard disk drive 34, in order to reduce the amount of storage space needed for each such reference image. Objects which enter the observed area are of primary interest, rather than the observed area itself, and a low-resolution image of the observed area is thus sufficient for most applications.

For each detected object such as the person 86, the image processing section 27 also determines the Cartesian coordinates within each image of the midpoint of the lower side of the bounding box for that detected object. This information is saved on the hard disk drive. In other words, for each detected object, a Cartesian coordinate pair for that object is saved for each video image in which the object is present. As to a given object, the set of Cartesian coordinate pairs for all of the images in which that object was present can serve as a trace of the movement of the object within the observed area, as will be discussed in more detail later.

The image processing section 27 also saves a selected image of each detected object. In the disclosed embodiment, this selected image is just a portion of the overall image from the video camera 23. In particular, it is the portion of the image which is located within the bounding box for the object of interest. Thus, if the selected image for the person 86 was derived from the video image of FIGURE 6, it would be the portion of that image within the bounding box 87. This selected image or image portion is stored at full resolution, in order to have a top-quality view of the detected object. This is because a top-quality view will often be useful at a later point in time, for example to facilitate identification of a particular individual. Since the selected image is just a portion of the overall video image, the amount of memory needed to store the selected image at full resolution is often less than the amount of memory which would be needed to store the overall video image at a reduced resolution.

The selection of the particular image to be saved is an automatic determination, which is effected with simple heuristics. In most applications, the objects of primary interest are humans, and it is therefore desirable to favor selection of an image in which the person is facing generally toward the camera unit 12, and is reasonably close to the camera unit 12. In this regard, if the lower side of the bounding box is moving downwardly in successive images, it is assumed that the person is moving toward and facing the camera. On the other hand, if the lower side of the bounding box is not moving downwardly or upwardly, the new view will nevertheless be favored over a prior view, if the subject appears to be larger, as reflected by an increase in the vertical size of the bounding box.

Thus, when an object such as a person first appears, the image processing system 27 temporarily saves the first video image containing the person, and tentatively designates this image as the selected image. Then, in each successive image, the image processing section 27 checks to see whether the lower side of the bounding box in the current image is lower than the lower side of the bounding box in the tentatively selected image. If it is, then the prior image is discarded and the current image is tentatively designated as the selected image.

On the other hand, if the lower side of the bounding box for the object is found to have the same vertical position in the current image as in the tentatively selected prior image, then the section 27 checks to see if the vertical height of the bounding box in the current image is larger than the vertical height of the bounding box in the tentatively selected image. If so, then the prior image is discarded and the current image is tentatively designated as the selected image.

When the object eventually exits the observed area, the image processing section 27 takes the tentatively selected video image, and saves on the hard disk drive 34 the portion of that video image which is within the bounding box. As discussed above, this portion of the image is saved at full resolution.

Although the disclosed embodiment uses the foregoing selection criteria in order to favor facial close-ups of humans, it will be recognized that other applications may require other selection criteria. For example, if the camera unit 12 was being used to monitor vehicles, and if it was desirable to favor close-ups of the rear license plates of the vehicles, the selection criteria could be adjusted to achieve this.

In association with each detected object, the image processing section 27 also saves on the hard disk drive 34 certain other information, including a human-readable timestamp which indicates the date and time that the object was detected, the name of the disk file containing the reference image which was in use while the object was present in the observed area, and a keyword indicating how the object entered the observed area. As to the latter, the allowable keywords in the disclosed embodiment are "enter", "deposit" and "other", but it will be recognized that there could be additional allowable keywords, or fewer allowable keywords.

Over time, changes may occur in the background of the observed area. For example, the ambient lighting may change, due to variations in the sunlight entering through windows, opening and closing of window blinds, opening and closing of interior doors, actuation and deactuation of interior lighting, and so forth. Similarly, people may deposit, remove or reposition objects in the observed area. Each such change creates a permanent region of difference between the original reference image and each current video image. Absent a periodic update of the reference image, the system will continue to track these difference or change regions as detected objects. Lighting changes would thus be treated as detected objects, resulting in the storage of images which are not really of interest, and which simply waste memory on the hard disk drive 34.

In order to avoid this, the image processing section 27 checks for a condition in which nothing in the observed area has changed for a specified time interval, such as twenty seconds. In response to detection of this condition, the image processing section 27 terminates the tracking of all detected objects which were being actively tracked, saves the current video image as a new reference image, and then resumes monitoring of the observed area using the new reference image. In general, humans almost never remain completely still for more than a second or two, and there is thus little risk of selecting as the reference image a video image which has a human in it.

With reference to FIGURE 1, the image processing section 27 of the camera unit 12 has been designed so that it is Internet-compatible, and in particular is compatible with Internet standards commonly known as the World Wide Web (WWW). As a result, the camera unit 12 can be coupled directly to the network 14, and the stored information which was discussed above can be accessed and viewed by a person using a web browser on a remote unit such as the workstation 13. To facilitate this, the image processing section 27 stores the results of its monitoring activities on the hard disk drive 34 in a manner which will now be described with reference to FIGURE 7.

More specifically, FIGURE 7 shows the directory organization of a portion of the hard disk drive 34. In FIGURE 7, the rectangular boxes 91 to 96 are each a diagrammatic representation of respective directory. These directories store the information relating to monitoring activities of the image processing section 27. The directory 91 is a subdirectory of a not-illustrated root directory, the directories 92 to 94 are subdirectories of the subdirectory 91, and the directories 95 and 96 are subdirectories of the directory 94.

The subdirectory 91 contains a file MASTER.HTML, and the subdirectories 92 and at 93 each contain a respective file named LOGLIST.HTML. The MASTER.HTML and LOGLIST.HTML files are each a WWW-compatible file in hypertext mark-up language (HTML) format, and facilitate access to other information stored in the directory structure of FIGURE 7. The MASTER.HTML file has hypertext links to each of the LOGLIST.HTML files, and the LOGLIST.HTML files are each an HTML shell which invokes an applet that facilitates access to files within the directory containing that particular LOGLIST.HTML file.

The directory 92 corresponds to a single day in which the camera unit 12 of FIGURE 1 was operational. When the camera unit 12 first begins monitoring a given area, the subdirectory 91 exists, but the subdirectories 92 and 93 do not exist. During the first day of monitoring, the image processing section 27 creates the subdirectory 92, and uses it to store information from that day's monitoring activities. Upon commencing each subsequent day of monitoring, the image processing section 27 creates a similar additional subdirectory, one of which is shown at 93. The name of each such subdirectory is in the format MM.DD.YY, and identifies the month, day and year for which the directory contains information.

Each of the subdirectories 92 and 93 has therein the above-mentioned LOGLIST.HTML file. Further, each such subdirectory includes a LOGLIST file, which is a summary list identifying all the log entries for the day in question, each log entry corresponding to a respective detected object. Each subdirectory also includes, for each log entry in its LOGLIST file, a separate file with the name format ENTRYX, where X is an integer. Each ENTRYX file contains details associated with the specific detected object, including the name of the file which contains the reference image that was in effect when the object was present, the keyword indicating how the object entered the scene, the series of Cartesian coordinate pairs which trace the path of movement of the object within the image, the selected image of the object in a full-resolution image format, and two Cartesian coordinate pairs which respectively identify the position in the video image of two opposite corners of the bounding box for the selected image.

The summary information in the LOGLIST file includes two elements for each detected object, namely a timestamp representing the date and time when the corresponding object was detected, and the name of the ENTRYX file containing details about that detected object. In the disclosed embodiment, this information in the LOGLIST file is in an ASCII format.

The subdirectories shown at 95 and 96 in FIGURE 7 each correspond to a respective day, and each contain all of the reference images used during that day. More specifically, when the camera unit 12 first begins monitoring a selected area, the subdirectory 94 will exist, but the subdirectories 95 and 96 will not yet exist. During the first day of monitoring, the subdirectory 95 is created, and is used to store all of the reference images for that day. At the beginning of each subsequent day of monitoring, a new subdirectory is created, one of which is shown at 96.

Each of the subdirectories 95 and 96 has a name format of MM.DD.YY, representing the date corresponding to the information stored in the subdirectory. Each of the subdirectories 95 and 96 contains a plurality of files with the name format REFIMGXX.PGM, where XX is a unique integer. Each REFIMGXX.PGM file contains a respective reference image. Each time a new reference image is saved during the day, a new REFIMGXX.PGM file is created, and is named using the next highest unused XX integer.

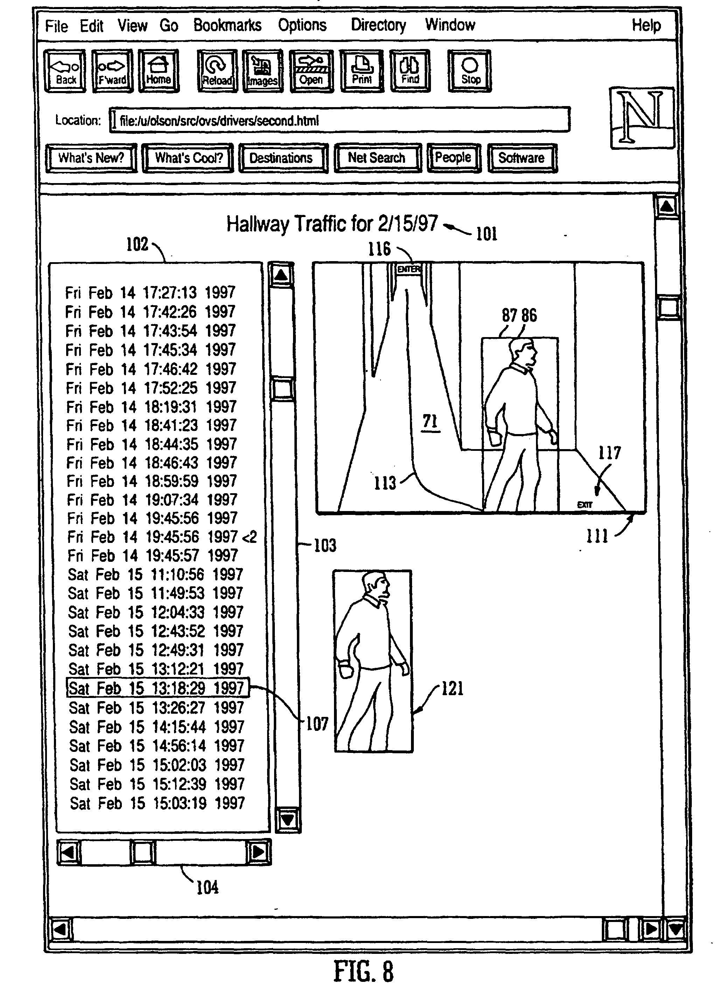

FIGURE 8 is a diagrammatic view of the display 21 of FIGURE 1 when an operator is using the workstation 13 to observe information stored on the hard disk drive 34 by the image processing section 27. In FIGURE 8, the operator is using a web browser program which is sold under the tradename NETSCAPE by Netscape Communications Corporation of Mountainview, California. However, it will be recognized that some other equivalent web browser could alternatively be used. In FIGURE 8, the user has invoked the WWW capabilities of the Internet to access the WWW-compatible file MASTER.HTML in the directory 91 (FIGURE 7), which in turn has used the various LOGLIST.HTML files in the subdirectories 92 and 93 to access information in each of the respective LOGLIST files. The MASTER.HTML file may optionally require an operator to provide a valid password before giving the operator access to the information stored on the hard disk drive 34.

At the top of the displayed web page is a title 101, which is provided by the MASTER.HTML file, and which reflects the particular installation or application. Along the left side of the page is a scroll box 102, in which the MASTER.HTML and LOGLIST.HTML files display a list of the timestamps from all of the LOGLIST files, each timestamp including both a date and a time. Vertical and horizontal scroll bars 103 and 104 are provided if the number of timestamp entries or the length of any single timestamp entry is larger than can be displayed at one time within the scroll box 102. In the scroll box 102, the operator has highlighted one entry, which corresponds to a detected object that was present at the specified time on February 15, 1997.

To the right of the scroll box 102, information from the ENTRYX file corresponding to the selected log entry is displayed. More specifically, a video image 111 is presented, which represents the event that was discussed above in association with FIGUREs 5 and 6, namely the detection and tracking of the person 86. The image 111 is created by first retrieving and displaying the REFIMGXX.PGM file corresponding to the selected log entry 107. Then, the selected image corresponding to the log entry 107 is retrieved from the ENTRYX file, sub-sampled so as to have the same resolution as the reference image, and displayed in place of the corresponding portion of the reference image. Thereafter, the bounding box 87 associated with the selected image is superimposed on image 111.

Then, using the series of Cartesian coordinate pairs stored in the corresponding ENTRYX file, a trace 113 of the movement of the detected object is overlaid on the image 111. As discussed above, the trace 113 represents the movement of the midpoint of the lower side of the bounding box 87, and thus is an accurate representation of where the person 86 walked. Then, labels are superimposed on the image 111, as at 116 and 117, based on the information stored in the ENTRYX file. In FIGURE 8, the label 116 is the word "ENTER", and indicates that the person 86 entered the observed area at approximately the location of this label, or in other words at the far end of the hallway 71. The label 117 is the word "EXIT", and indicates where the person 86 exited the observed area, in this case by continuing down the hallway 71 and underneath the camera unit 12. The bounding box 87, trace 113 and/or labels 116 and 117 may optionally be displayed in one or more different colors, so that they are more readily visible.

To the right of the scroll box 102, and below the image 111, the image processing section 27 displays a further image 121, which is smaller than the image 111. The image 121 corresponds to the portion of the image 111 within the bounding box 87, but is displayed at full resolution rather than at the lower resolution used for the larger image 111. Thus, if an attempt is being made to identify a particular person, the features of that person may be more clearly visible in the high resolution image 121 than in the reduced resolution image 111. Since the saved image 121 was selected using the criteria discussed above, which are intended to favor facial close-ups of humans, it will be noted that the face of the person 86 is visible, and that the person is closer to the camera than would have been the case if the system had simply stored the first image in which the person 86 had been detected, without attempting to apply any selection criteria.

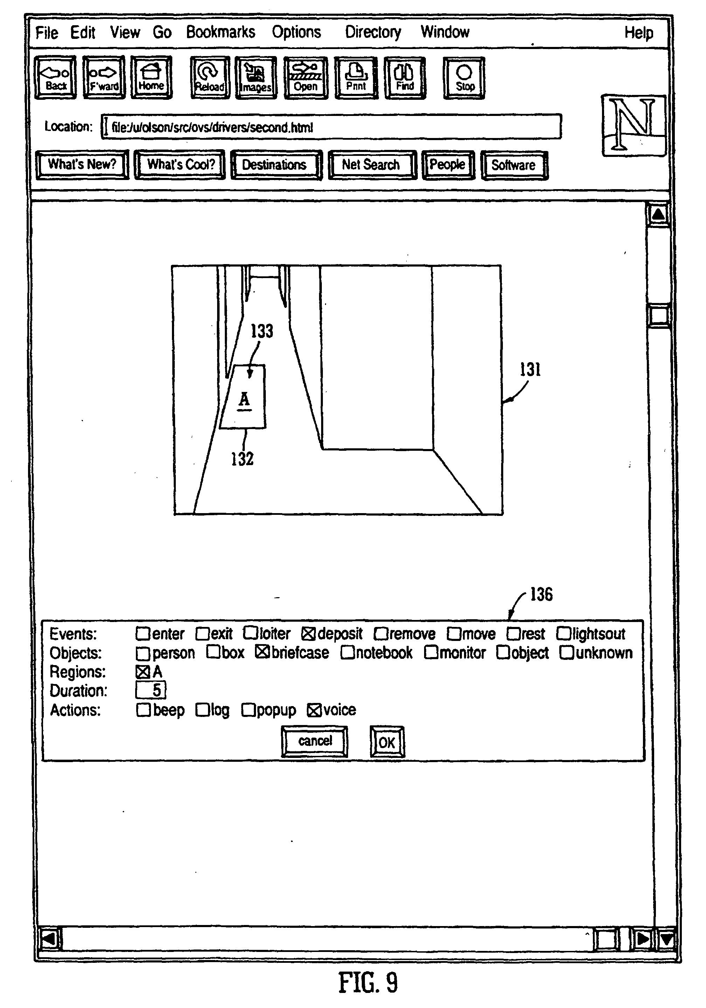

FIGURE 9 is a diagrammatic view similar to FIGURE 8, but showing a different web page provided by the MASTER.HTML file. This web page includes an image 131, which is the current reference image, for example the reference image shown in FIGURE 5. The user can then use a mouse to identify one or more regions in this image, for example the region 132. The user may define the region by using the mouse pointer to identify the corners of the region, while clicking on each corner. Each time the user defines a region, it is automatically given a label, which is a letter. For example, the region 132 in FIGURE 9 has been given the label "A". As discussed above, the image processing section 27 maintains a history of the movement of the midpoint of the lower side of the bounding box for each object. If this midpoint were to remain within a given region, such as the region 132, for a predefined period of time, it might represent loitering, and could be detected by the image processing section 27.

The web page of FIGURE 9 also includes an event selection box 136, which the operator can use to indicate that the imaging processing section 27 is to check for a specified event, and to indicate what action is to be taken if the specified event occurs. In this regard, the operator can use a mouse to select one of several events identified in box 136, including an enter event, an exit event, a loiter event, a deposit event, a remove event, a move event, a rest event, and a lightsout event. The event selection box 136 allows the user to optionally restrict the monitoring for the specified event to certain types of detected objects, including a person, a box, a briefcase, a notebook, a computer monitor, any type of object, or just an unknown object. Event selection box 136 also allows the user to restrict the monitoring event to a particular region by identifying its label letter, such as the region 132 identified by the label letter "A".

For certain events, the event selection box 136 allows the user to specify a time duration in seconds. For example, if the user is instructing the system to monitor for a loiter event within a specified region, the user may specify that the loiter event is to be detected only if the specified object remains within the specified region for a period of at least five seconds. The event selection box 136 also allows the operator to specify the action to be taken if the specified event occurs, including an audible beep, the creation of a log entry on the hard disk drive 34, a pop-up window on the display 21 of the workstation 13, or a synthesized voice announcement which indicates that the event of interest has occurred, such as a synthesized announcement of the word "loiter". It will be recognized that the event selection box 136 could be modified to allow the identification of other events, objects, conditions, or actions. For example, actions could also include making a phone call to a specified number such as that of a security agency, or sending an electronic mail message to a specified electronic mail address.

This aspect of the present invention provides a number of technical advantages. One such advantage is that, by periodically saving reference images, by saving these reference images at a reduced resolution, by saving just selected images of objects of interest, and by saving just portions of the overall image, the amount of memory needed to store images is greatly reduced in comparison to known systems. A related advantage is that the amount of stored information which an operator would have to review in response to the occurrence of an event is greatly reduced in comparison to known systems. A further advantage is that the available information is presented with timestamp information, so that an operator can rapidly identify the events of interest within a time frame of interest, and can quickly and easily review those events.

Yet another advantage is the storage of a trace representing the movement of a detected object, so as to later provide a readily understandable visible image of the object's movement, without storing numerous video images corresponding to the entire time interval while the detected object was present in an observed area. Another advantage is that the use of a web browser to access information logged by the system permits a person to access the information from virtually anywhere that a computer is available, including a WWW-compatible cellular phone.

Another advantage results from the fact that the selection of an image to save is based on criteria which are intended to optimize the image, for example to make it likely that a detected person is facing and close to the camera. Another advantage is that the disclosed system can be a self-contained camera unit which is WWW-compatible. A further advantage is that the disclosed system is more reliable than certain known technologies, such as known systems having a video cassette recorder (VCR) that is subject to mechanical breakdowns and that has heads which need to be periodically cleaned.

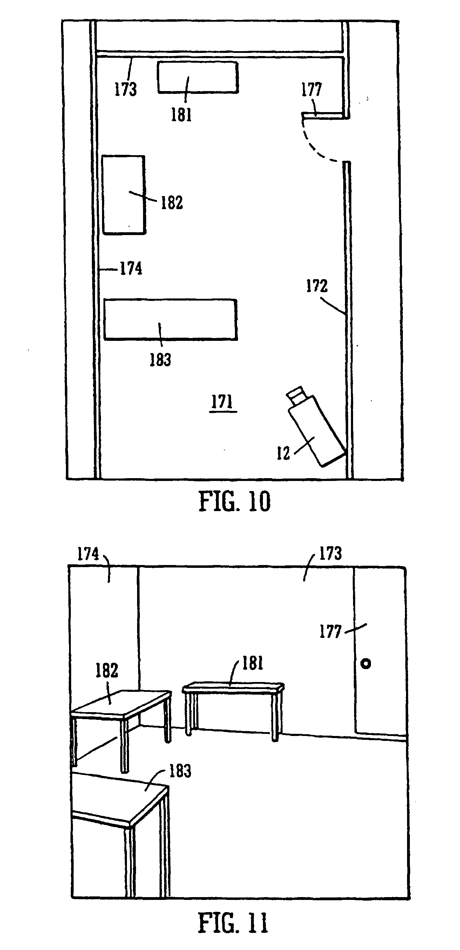

In order to facilitate an understanding of a second aspect of the present invention, further a specific exemplary application for the system 10 of FIGURE 1 will now be disclosed. However, it will be recognized that there are numerous other applications and environments in which the system 10 of FIGURE 1 could be utilized. With respect to the exemplary application, FIGURE 10 is a diagrammatic top view of a portion of a room 171 within a building, including three walls 172, 173 and 174. A door 177 is provided in the wall 172 at a location near the wall 173, and swings into the room 171 when opened. Three tables 181 to 183 are provided in the room, the table 181 being adjacent the wall 173, the table 182 being adjacent the wall 174, and the table 183 having one end adjacent the wall 174. The video camera 12 is supported on the wall 172, and is directed toward the corner of the room which is defined by the intersection of walls 173 and 174.

FIGURE 11 is a diagrammatic view of a video image which was obtained from the video camera 12 in the environment of FIGURE 10, and which thus shows the door 177, and portions of the walls 173 and 174. The image of FIGURE 11 also shows the tables 181 and 182, and a portion of the table 183. For purposes of discussion, it is assumed that the image of FIGURE 11 has been saved as a reference image, analogous to the reference image discussed above in association with FIGURE 2A.

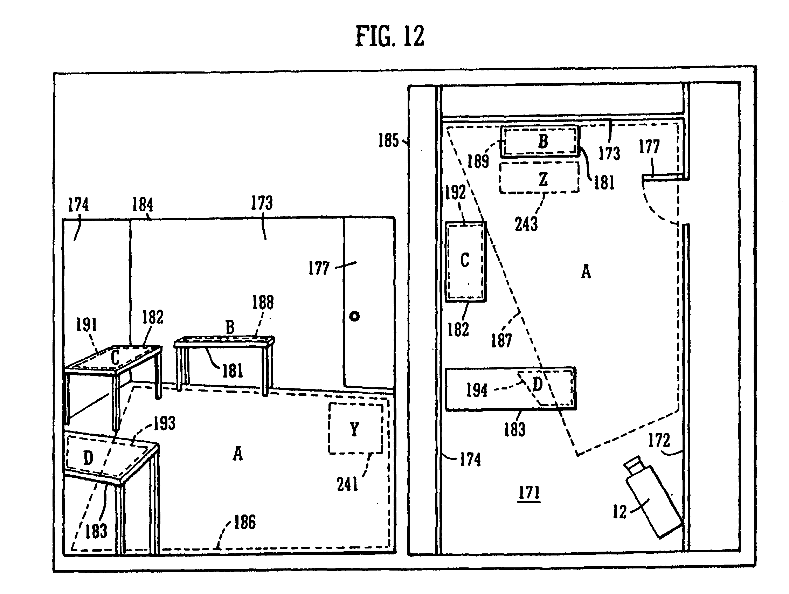

FIGURE 12 is a diagrammatic view of a portion of the screen of the display 21 (FIGURE 1). On the left is an image 184, which in FIGURE 12 is the reference image shown in FIGURE 11. On the right is a map 185, which is a digitized image of the top view of the room 171 from FIGURE 10. In the disclosed embodiment, the image 185 was introduced into the computer using a not illustrated scanner to digitize a blueprint or drawing. The workstation 13 is not cognizant of physical structure within the map 185, such as the walls 171 to 174 or the tables 181 to 183. Instead, the workstation 13 sees the map 185 as simply a two-dimensional image defined by an array of pixels.

The video image 184 and the map 185 are thus just respective arrays of pixels to the workstation 13. In order to give the computer a basis for interrelating them, a mapping is established between the image 184 and the map 185, in the following manner. With reference to FIGURE 12, an operator uses the mouse 19 (FIGURE 1) to define one or more quadrilateral regions on each of the image 184 and the map 185. Each quadrilateral region is used to designate an upwardly facing surface that can support a person or an object, such as the floor, or the top surface of a table.

For example, the operator may first draw a quadrilateral region 186 on the image 184 of FIGURE 12. The quadrilateral region 186 corresponds to most of the floor that is visible in the image 184. The operator may draw the quadrilateral region 186 by clicking the mouse at selected points on the image 184, in order to define the four corners of the quadrilateral region. An outline of the quadrilateral region 186 is overlaid on the displayed image 184. In FIGURE 12, the outline of the quadrilateral region 186 is represented by a broken line, but it could alternatively be a solid line, and/or could be displayed in a color so as to be easily visible on the gray-scale image 184.

The operator then assigns the quadrilateral region 186 a label, which in FIGURE 12 is the letter "A" shown in the middle of the quadrilateral region 186. Alternatively, the operator could have used the name "FLOOR" for the quadrilateral region 186, because it represents a portion of the floor. Then, as accurately as possible, the operator draws on the map 185 a corresponding quadrilateral region 187, which represents exactly the same portion of the floor. Although the quadrilateral regions 186 and 187 represent the same portion of the floor, they have different sizes and shapes, due to the fact that the image 184 is a perspective view of the room, and the map 185 is a top view. The operator gives to the quadrilateral region 187 the same label "A" which was used for the quadrilateral region 186, so that the workstation 13 will recognize that the quadrilateral regions 186 and 187 correspond to each other. After a quadrilateral region has been drawn, the workstation 13 allows the operator to adjust the shape and/or size of the quadrilateral region, for example by using the mouse 19 to drag and drop a side or a corner of the quadrilateral region.

In a similar manner, the operator may draw additional pairs of quadrilateral regions. For example, in FIGURE 12, the operator has drawn on the image 184 a quadrilateral region 188, which designates the top surface of the table 181, and has drawn a corresponding quadrilateral region 189 on the map 185. The operator has given these two related quadrilateral regions the label "B". Further, the operator has drawn associated quadrilateral regions 191 and 192 in order to designate the top surface of the table 182, and has given them both the label "C". In addition, the operator has drawn on the image 184 a quadrilateral region 193, which represents the portion of the top surface of table 183 that is visible in the image 184, and has drawn a corresponding quadrilateral region 194 on the map 185. The quadrilateral regions 193 and 194 have been given a common label "D".

For each pair of corresponding quadrilateral regions drawn by the operator, the workstation 13 sets up a warp transformation which uses a known mathematical technique, and which translates a selected point in one of the quadrilateral regions of the pair to a corresponding point in the other quadrilateral region of the pair. In order to permit the system to determine this warp transformation, the workstation 13 must know which side of a given quadrilateral region in the image 184 corresponds to which side of an associated quadrilateral region on the map 185. In the disclosed embodiment, the workstation 13 allows the operator to identify the location of the camera 12 on the map 185. The workstation 13 then automatically associates the side of a quadrilateral region which is lowest in the image 184 to the side of the corresponding quadrilateral region on the map 185 which is closest to the camera 12. However, it would alternatively be possible to ask the operator to manually identify related sides of the quadrilateral regions of each pair, for example by using the mouse 19 to click on a selected side of one quadrilateral region, and then using the mouse to click on the corresponding side of the other quadrilateral region.

Although the present discussion refers to the use of quadrilateral regions, it will be recognized that outlines of other shapes could be used. For example, an outline could have the shape of some other polygon or a circle, or could be an irregular outline, so long as an appropriate warp transformation is provided to relate each point in one region to a point in the corresponding region.

The operator may sometimes find it necessary to draw quadrilateral regions which overlap. For example, in FIGURE 12, the quadrilateral region 193 representing the top of table 183 overlaps with a portion of the quadrilateral region 186 designating the floor of the room. In the event that a particular point in the image 184 is disposed within both of these quadrilateral regions, the workstation 13 must know whether to map the point from the image 184 to the map 185 using the warp transformation for the quadrilateral regions 193 and 194, or the warp transformation for the quadrilateral regions 186 and 187. Therefore, wherever two quadrilateral regions overlap in the image 184, the workstation 13 needs to know which of the two quadrilateral regions is to be given priority over the other.

In the disclosed embodiment, the workstation 13 automatically assumes that the smallest quadrilateral region has priority. Thus, in the image 184 of FIGURE 12, the quadrilateral region 193 would be given priority over the quadrilateral region 186. In other words, if a given point fell within the overlap between the quadrilateral regions 193 and 186, the point would be translated to map 185 using the warp transformation for quadrilateral regions 193 and 194, rather than the warp transformation for quadrilateral regions 186 and 187. This default priority scheme works relatively well in practice, because a larger quadrilateral region (such as quadrilateral region 186) usually represents a portion of the floor, whereas a smaller quadrilateral region (such as quadrilateral region 193) usually represents a top surface of a table or some other object resting on the floor. The table top will normally be visible to the video camera, but will obscure a portion of the floor from the view of the camera. Thus, where two quadrilateral regions overlap, assigning the area of overlap to the smaller quadrilateral region, rather than the larger quadrilateral region, will normally achieve a result that corresponds to what is visible to the camera and what is not. However, there may be circumstances in which the operator may wish to specify a different priority as to a given region of quadrilateral region overlap, and workstation 13 permits the operator to manually enter prioritization information that takes precedence over the default prioritization.

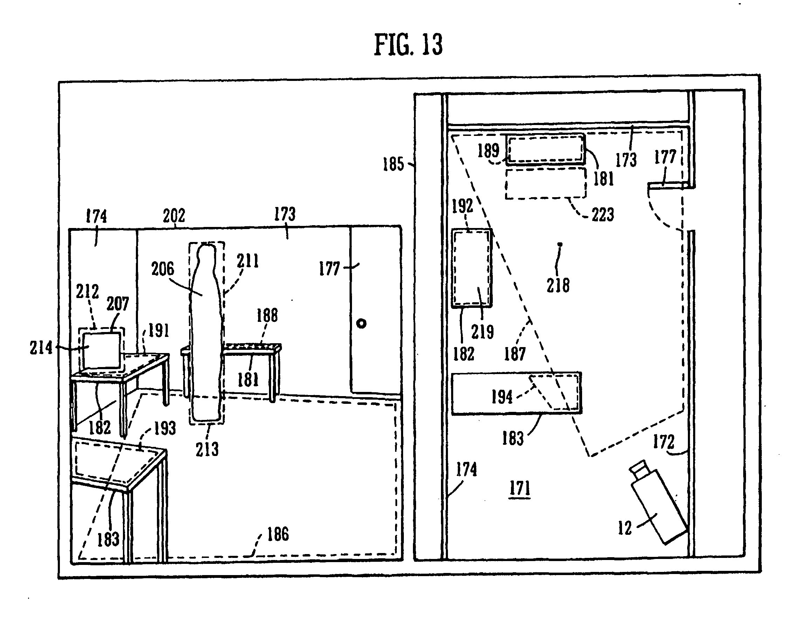

After the operator has drawn at least one pair of corresponding quadrilateral regions in the image 184 and the map 185, and has defined the priority for any region of overlap, the system 10 may be placed in a mode of normal monitoring operation. Successive images from the video camera 12 are processed relative to the reference image of FIGURE 11, in a manner analogous to that described above in association with FIGUREs 2 and 3. In this regard, FIGURE 13 is a diagrammatic view similar to FIGURE 12, except that the displayed video image is a current video image 201 rather than the stored reference image of FIGURE 11.

In FIGURE 13, the current video image 201 reflects that a person 206 entered the room while carrying an object 207, placed the object 207 on the top surface of the table 182, and then started to walk away from the object 207. The object 207 may, for example, be a briefcase or a box. The bounding box for the person 206 is shown at 211, and the bounding box for the object 207 is shown at 212. The midpoints of the lower sides of the bounding boxes 211 and 212 are respectively shown at points 213 and 214.

The midpoint 213 is disposed within the quadrilateral region 186, and the warp transformation for quadrilateral regions 186 and 187 is therefore used to map the point 213 from the quadrilateral region 186 into a corresponding point 218 within the quadrilateral region 187 of the map 185. A symbol such as a dot is displayed on the map 185 at the point 218, in order to provide on the map 185 a visible indication of where the person 206 is standing within the room. The midpoint 214 is disposed within the quadrilateral region 191, and the warp transformation associated with quadrilateral regions 191 and 192 is therefore used to map the point 214 to a corresponding point 219 on the map 185. A dot is displayed at the point 219 on the map 185, in order to indicate where on the map 185 the object 207 is located. As the person 206 moves around within the room, the dot 218 representing the person will move on the map 185, in order to provide an accurate indication where in the room the person is currently located.

If the person 206 moves to a location where the point 213 is outside each of the quadrilateral regions 186, 188, 191 and 193 in the image 201 of FIGURE 13, then the point 213 will not be mapped to the map 185 until it is again within one of these four quadrilateral regions. Consequently, the dot 218 will not be displayed on the map 85 so long as the point 213 is outside these quadrilateral regions on the image 201.

Referring back to FIGURE 12, the workstation 13 allows the operator to also define one or more additional quadrilateral regions, one of which is shown at 223 on the map 185. The quadrilateral region 223 appears only on the map 185, and has no corresponding quadrilateral region on the image 184. The operator gives the quadrilateral region 223 a unique label, for example the label "Z". Referring again to FIGURE 13, the quadrilateral region 223 can be used to check for certain events. For example, if the workstation 13 determines that the point 218 has moved to a location on the map which is within the quadrilateral region 223, the workstation 13 could take some special action, such as producing an audible alarm. In a variation of this example, the workstation 13 might not produce an audible alarm immediately after the point 218 enters the quadrilateral region 223, but only if the point 218 remains within the quadrilateral region 223 for a specified period of time, which may be referred to as a "loiter" event.

An event selection box 136, such as previously illustrated in Figure 9, can be presented on the display 21 of FIGURE 1 and used in conjunction with the portion of the display screen which is shown in FIGURE 13. An operator can use the event selection box 136 to specify that the workstation 13 is to check for a certain event, and to indicate what action is to be taken if the specified event occurs. This process has been previously described above in conjunction with Figure 9.

Referring again to FIGURE 12, the workstation 13 allows the operator to also define one or more additional quadrilateral regions, one of which is shown at 241 on the reference image 184. The quadrilateral region 241 appears only on the reference image 184, and has no corresponding quadrilateral region on the map 185. The operator gives the quadrilateral region 241 a unique label, for example the label "Y". This type of quadrilateral region is used to limit mapping of points from the image 184 to the map 185. More specifically, if a detected change region falls completely within the quadrilateral region 241, the change region is completely ignored for all purposes, and thus no point is mapped from the image 184 to the map 185 as a result of that detected change region. On the other hand, if only a portion of a detected change region falls within the quadrilateral region 241, then that change region is handled in a normal manner, as previously described. This capability is provided to allow certain types of activity in a monitored area to be intentionally ignored.

More specifically, as one example, if a computer printer was located within the monitored area, each time the printer ejected a sheet of paper, the system 10 would normally detect and log this event. Similarly, if an unattended computer monitor was within the monitored area and had a screen-saver displayed, the system 10 would normally detect and log display changes caused by the screen saver program. By placing the quadrilateral region 241 around the printer, or around the computer monitor, all activity associated with the printer or monitor would occur entirely within the quadrilateral region 241, and would thus be ignored. Consequently, ejection of paper from the printer or changes in the display of the monitor would be ignored, so that the system 10 would not log numerous events which were of little or not interest. In FIGURE 12, the quadrilateral region 241 is within the quadrilateral region 186. If a detected change region is entirely within the quadrilateral region 241, it will be completely ignored even though it is also within the quadrilateral region 186.

This aspect of the present invention provides a number of technical advantages. One such technical advantage is that a system operator can rapidly and accurately define the mapping between a video image and a site map. So long as the operator is reasonably careful to draw accurate quadrilateral regions, mapping errors can be substantially eliminated. For example, an object detected in the video image will not be incorrectly located on the wrong side of a wall. A further advantage is that this can be accomplished without any need to define camera parameters, including internal parameters such as focal length and millimeters per pixel, and external parameters such as the location and orientation of the camera. This is all automatically taken into account.

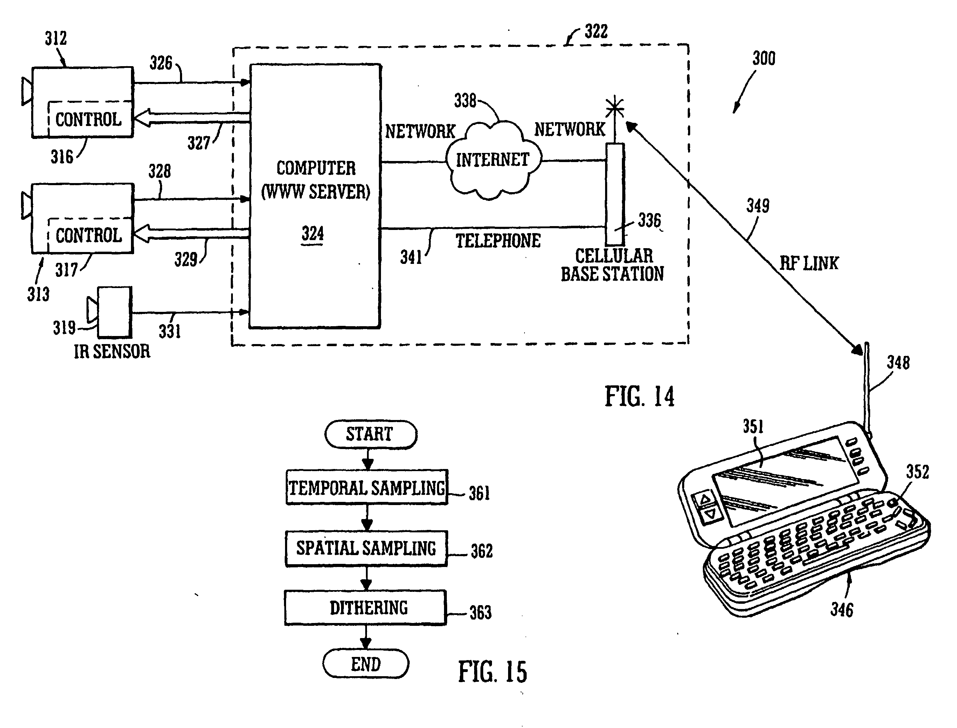

FIGURE 14 is a diagrammatic view of a monitoring apparatus 310 which embodies another aspect of the present invention. The monitoring apparatus 310 is used to monitor activities in one or more regions or areas of interest. For example, the monitoring apparatus 310 might be used at a residence to monitor activity in one or more rooms, in the yard, at the front door, and/or in the driveway. It could also be used for monitoring one or more areas in a commercial or industrial facility.

The monitoring apparatus 310 includes two image detectors 312 and 313, which in the disclosed embodiment are video cameras of a known type. The video cameras 312 and 313 each include a not illustrated charge coupled device (CCD) sensor, and a not illustrated zoom lens assembly for adjusting the field-of-view of the image focused on the CCD sensor. The video cameras 312 and 313 may provide different views of the same monitored area, or may each provide a view of a completely different monitored area.

The video cameras 312 and 313 each include a respective control section 316 or 317. The control sections 316 and 317 are each capable of automatically controlling the zoom setting of the zoom lens assembly in the associated video camera 312 or 313. Further, the control sections 316 and 317 each include a physical support for the associated video camera, which can effect automated adjustment of the physical orientation of the associated video camera 312 or 313. In other words, with reference to a detected image of the monitored area, the control sections 316 and 317 can each adjust the orientation of the associated camera 312 or 313 up, down, left or right, so that the detected image is adjusted upwardly, downwardly, leftwardly, or rightwardly within the monitored area.

The monitoring apparatus 310 also includes a sensor 319 that can detect an event of interest in an area monitored by at least one of the cameras 312 and 313. In the disclosed embodiment, the sensor 319 is similar to those used in systems which automatically open doors for customers at retail establishments. In particular, the sensor 319 is a passive infrared sensor capable of detecting a heat source within the area it monitors, including the presence of a human or animal.

The monitoring apparatus 310 further includes a system 322, which has therein a computer 324. The computer 324 may be a personal computer which includes a processor, and which includes a memory device such as a hard disk drive.

A video connection 326 is provided between the video camera 312 and the computer 324, in order to supply video images from the video camera 312 to the computer 324. A similar video connection 328 is provided from the video camera 313 to the computer 324. Control lines 327 are provided from the computer 324 to the control section 316 of the video camera 312, in order to provide the control section 316 with information that determines how the control section 316 will position the video camera 312, and how the control section 316 will set the zoom factor of the zoom lens assembly in the camera 312. A similar set of control lines 329 is provided from the computer 324 to the control section 317 of the video camera 313. The infrared sensor 319 has an output 331 which is coupled to the computer 324.

The system 322 further includes a cellular base station 336 of a known type which is used for communicating with cellular (wireless) telephones. The computer 324 is operatively coupled to the base station 336 by a network 338 which includes the Internet, and which may include one or more other networks such as a local area network, a wide area network, and so forth. The network 338 is coupled to a not illustrated network interface card provided in the computer 324. Since the network 338 includes the Internet, it is capable of transmitting information in the Internet format known as the World Wide Web (WWW), where documents called web pages are transferred between computers in a standardized format known as hypertext mark-up language (HTML) format.

The system 322 also includes a telephone line or system 341, which is coupled at one end to a not illustrated modem in the computer 324, and at its other end to the cellular base station 336.

The monitoring apparatus 310 further includes a portable communication unit 346, which is a cellular (wireless) telephone, and which also includes some additional capability, as discussed below. The portable unit 346 in the disclosed embodiment may be a unit which is available under the tradename NOKIA 9000 from NOKIA in Irving, Texas. The portable unit 346 has an antenna 348, which facilities wireless communication with the base station 336 through a radio frequency (RF) cellular telephone link 349.

The portable unit 346 has an LCD display 351 capable of displaying two-dimensional video images at a low resolution. Further, the portable unit 346 has a plurality of buttons or keys, one of which is indicated at 352. A operator can use these keys to input information into the portable unit 346. The keys include an alpha-numeric keyboard which has a "QWERTY" format similar to that found on personal computers, and include several function keys.

The monitoring apparatus 310 has the capability to take a video image detected by one of the video cameras 312 or 313, carry out some image processing on the detected image within the computer 324, transmit the resulting processed image to the portable unit 346 through the network 338, the base station 336, and the wireless link 349, and present the processed image on the display 351 of the portable unit 346. In the disclosed embodiment, the image processing carried out by the computer 324 includes steps which are explained below with reference to FIGURE 15.

In this regard, each of the video cameras 312 and 313 is capable of producing successive images at a speed and resolution which represents more information than can be transmitted through the wireless link 349. For example, even an inexpensive video camera can generate 30 frames or images per second, which each have a resolution of 320 by 240 gray-scale pixels. To transmit the data representing all of these pixels, a throughput of about 18 million bits per second would be needed. Existing wireless cellular links, such as that at 349 in FIGURE 14, can sustain a nominal throughput of about 9600 bits per second, or in other words about 1/2000 of the total video information produced by the video camera.

A further consideration is that existing portable units, such as that shown at 346 in FIGURE 14, have low-resolution monochrome displays. That is, the resolution of a display such as that shown at 351 is limited to about 160 by 120 pixels for a video image, where each pixel is either on or off, or in other words is a selected one of two different colors such as black and white.

For these reasons, the images from the video cameras 312 and 313 in FIGURE 14 are subjected by the computer 324 to image processing, which is depicted diagrammatically in FIGURE 15. FIGURE 15 is a flowchart showing successive image processing steps 161 to 163. The first step 161 is temporal sampling, which involves selecting a subset of the images produced by a given video camera. For example, of the 30 or so frames or images produced by a video camera every second, two of these frames or images may be selected for image processing, and the others may be discarded.

Then, at block 362, spatial sampling is carried out. In other words, subsampling is carried out in order to reduce the resolution of each of the images selected at 361. For example, each frame or image may be reduced to about 80 by 60 pixels.

Then, at block 363, a dithering process is carried out, in order to reduce the data representing each pixel to a single bit. That is, the bit associated with each pixel indicates whether that pixel is on or off. Stated differently, each pixel has one of two different colors, such as black and white. The dithering process sets the state of each pixel of the processed image based on the states of several pixels of the spatially sampled image, using a known technique. In the disclosed embodiment, the sampling and dithering carried out at blocks 361 to 363 of FIGURE 15 will reduce the video output to 9600 bits per second.

In the disclosed embodiment, the computer 324 takes the images that are processed according to the techniques discussed above in association with FIGURE 15, and successively inserts these processed images into a document or web page which is in HTML format, and which can thus be accessed through the Internet. In this regard, the portable unit 346 includes a manufactured-installed browser program, which is capable of accessing, downloading and displaying on the display 351 an HTML page or document obtained through the network 338 from the computer 324.

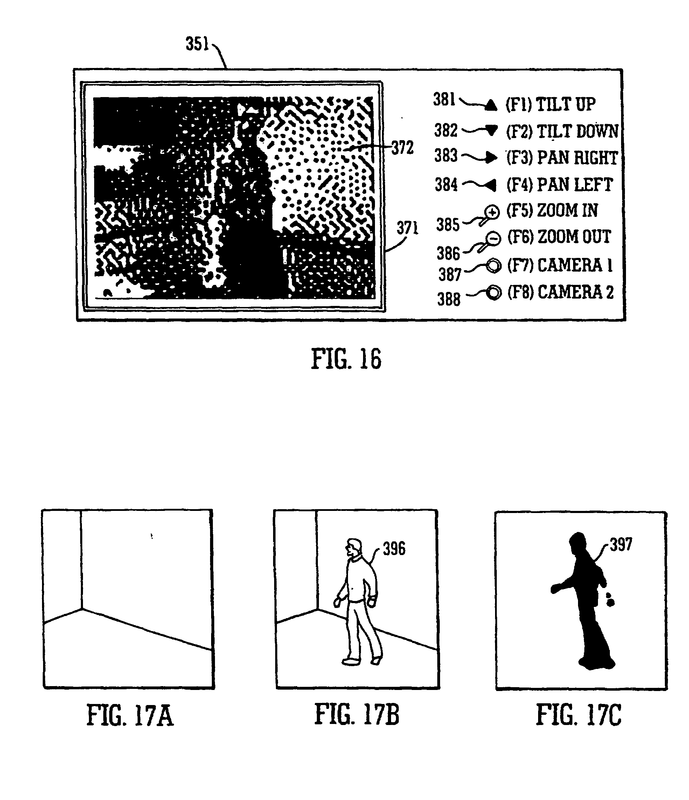

FIGURE 16 shows an example of how the display 351 of the portable unit 346 might present an HTML page generated by the computer 324. An image 371, which has been sampled and dithered according to steps 361 to 363 of FIGURE 15, is presented on the left side of the display 351. As discussed above, this is a monochrome (two-color) image, with a low resolution of 60 by 90 pixels. Nevertheless, it is sufficient to permit visual detection of the presence of a person in the field-of-view, for example the person indicated at 372 in the image 371.

To the right of the image 371, the HTML page includes eight icons, which are identified with reference numerals 381 to 388. To the right of each icon is a parenthetical expression in the form of "(FX)", where X is an integer. To the right of each parenthetical expression is a label identifying the function of the associated icon. Each parenthetical expression identifies on the portable unit 346 a function key which will cause the associated function to be effected. The icons 387 and 388 relate to the capability of the operator to select one of the two video cameras 312 and 313. If the operator presses the function key F7 associated with icon 387, an associated HTML link back to the WWW server program in computer 324 will cause the computer 324 to designate the first video camera 312 as the selected video camera. The computer 324 will then ignore the output of the second video camera 313, will subject only the output of the video camera 312 to the image processing described above in association with FIGURE 15, and will forward to the portable unit 346 only the processed images obtained from the selected video camera 312. On the other hand, if the operator pressed the function key F8 associated with the icon 388, the second video camera 313 will be designated as the selected camera, the video images from the camera 313 will be subjected to the image processing described above in association with FIGURE 15, and only the processed images from the camera 313 will be forwarded to the portable unit 346.

The icon 381 is an upwardly pointing arrowhead. If the operator pressed the function key F1 associated with the icon 381, an HTML link back to the WWW server program in the computer 324 will cause the computer 324 to output control signals at either 327 or 329 to the control section 316 or 317 in the currently selected video camera 312 or 313. These control signals will cause the control section 316 or 317 for the selected camera to tilt the orientation of the camera, so that the image associated with that camera moves upwardly in terms of its view of the area being monitored. Similarly, if the operator presses a respective one of the function keys F2, F3 or F4, which are respectively associated with icons 382 to 384, the selected camera 312 or 313 will be adjusted respectively down, right or left.

If the operator presses the function key F5 associated with the icon 385, an associated HTML link will cause the computer 324 to output control signals at 327 or 329 to the control section 316 or 317 of the selected video camera. These control signals will cause the zoom lens assembly in the selected video camera 312 or 313 to increase its magnification level in a manner commonly known as a zoom-in function. Alternatively, if the operator presses the function key F6 associated with the icon 386, its HTML link will cause the zoom lens assembly in the selected video camera to decrease its magnification level, in a manner commonly known as a zoom-out function.

If the portable unit 446 has a mouse-like pointing device, such as a small trackball, the operator can use the pointing device to select and "click" on any one of the icons 381 to 388, in order to effect the associated function. Similarly, if the operator happens to be accessing this HTML page from some other remote computer, and if that computer has a mouse, the operator can click directly on the icons 381 to 388.

As discussed above, the infrared sensor 319 is capable of detecting the presence, within its field-of-view, of a heat source such as a human or animal. When the sensor 319 outputs a signal at 331 to indicate that it has detected the presence of such a heat source, the computer 324 responds by using its not illustrated modem to place a telephone call to the telephone in the portable unit 346, namely through the telephone line 341, the base station 336 and the wireless link 349. This notifies the person or operator possessing the portable unit 346 that something is happening in the remote area being monitored by the system 310 of FIGURE 14. The operator may then use the browser provided in the unit 346 to access and download the HTML page generated by the computer 324, in order to obtain a screen display like that shown in FIGURE 16, so that the operator can view the image 371 and determine what is happening in the monitored area.

Alternatively, it would be possible to omit the sensor 319, and to have the computer 324 detect the occurrence of an event of interest by appropriate processing of the raw video images received from either of the video cameras 312 and 313. For example, FIGURE 17A is a diagrammatic view of an image of a monitored area produced by the video camera 312. In this case, the monitored area happens to be the corner region of a room. FIGURE 17B is a subsequent image from the same camera, which was taken after a person 396 had walked into the monitored corner of the room.

The current image in FIGURE 17B can be compared to the prior reference image of FIGURE 17A, in order to determine whether the current image differs in any significant way from the reference image. For example, this comparison can be carried out on a pixel-by-pixel basis by first determining the absolute value of the difference between the gray-scale color values for each pixel, and by then comparing the result to a threshold value. If the absolute value of the difference for a given pixel is less than the threshold value, then the pixel is turned off. On the other hand, if the absolute value of the difference is above the threshold value, then the pixel is turned on.

The result is a monochrome (two-color) image, such as that shown in FIGURE 17C. In FIGURE 17C, there are a group of pixels at 397 which correspond to the person 396, and which have been turned on to indicate that something has changed relative to the reference image of FIGURE 17A. This condition can be used to trigger a telephone call from the computer 324 to the portable unit 346. It should be evident that, while the infrared sensor 319 detects heat, the alternative approach described in association with FIGURE 17 detects motion or a change in the video image, rather than the presence or absence of heat.

In the disclosed embodiment, the image processing described in association with FIGURE 15 does not include the use of video compression techniques. However, it will be recognized that the computer 324 of FIGURE 14 could be provided with hardware and/or software capable of performing a known video compression technique, and that the portable unit 346 could be provided with the capability to decode the compressed video information for purposes of display. For example, video compression could be effected according to the standard known as MPEG-4. In the event that video compression was provided in this manner, it would increase the amount of video information which could be transmitted in real-time from the computer 324 to the portable unit 346. Consequently, the image processing described in association with FIGURE 15 could be adjusted to increase the number of images processed and transmitted per second, and/or to increase the resolution of the processed images.

This third aspect of the present invention provides a number of technical advantages. One such technical advantage is that the wireless link to a portable unit allows the monitored area to be viewed from almost any remote location and at any convenient time. Moreover, it allows the camera position and/or operation to be adjusted from that remote location. Another advantage is that the occurrence of an event of interest in the monitored area can be detected, and an indication of the detection of this event can be automatically sent to the portable unit. The person in possession of the portable unit can then access images from a camera in the monitored area, in order to determine whether there is in fact a problem which requires attention. If there is no problem, the person could make a telephone call, or otherwise use the portable unit to prevent the automatic transmission of a message to the police, the fire department, a security agency, or the like.

Still another advantage is that the information from the video cameras is provided in a document in HTML format, which can be easily accessed from the portable unit, or from any convenient computer having a WWW-compatible browser. Yet another advantage results from the use of image processing techniques to conform the amount of video information to a level which is compatible with the available bandwidth of a wireless link and which is compatible with the available resolution of the portable unit, while still providing at the portable unit an image that has sufficient resolution to permit detection of the presence of a person or an object in the monitored area.

Although one embodiment has been illustrated and described in detail, it should be understood that various changes, substitutions and alterations can be made therein without departing from the scope of the present invention. For example, although the disclosed embodiment has two separate video cameras, it will be recognized that only one camera could be provided, or that more than two cameras could be provided. As another example, the disclosed embodiment uses gray-scale video cameras, but it will be recognized that color video cameras could also be used. Further, although the disclosed embodiment uses image detectors which are video cameras, it will be recognized that there may be applications where a different type of image detector would be appropriate, for example a two-dimensional staring array infrared detector.

As still another example, the supplemental sensor provided in the disclosed embodiment is an infrared sensor, but it could be some other type of sensor, such as a photocell, a microphone, or the like. Also, even though the disclosed embodiment responds to an output signal from the infrared sensor by placing a telephone call to the telephone in the portable unit, it will be recognized that this information could be transmitted to the portable unit in some alternative manner, for example by sending a pager message to a pager circuit in the portable unit. Other changes, substitutions and alterations are possible, without departing from the scope of the present invention, as defined by the following claims.

Although one embodiment has been illustrated and described in detail, it should be understood that various changes, substitutions and alterations can be made therein without departing from the scope of the present invention. For example, although the disclosed embodiment uses quadrilaterals to define regions of interest on the displayed image and/or map, it will be recognized that other shapes could alternatively be used to define regions. Also, the disclosed embodiment uses a video camera which has a detector responsive to visual light, but it will be recognized that other types of detectors could alternatively be used, such as a staring array infrared detector. Further, the foregoing disclosure discusses an exemplary application for the disclosed embodiment, but it will be recognized that there are numerous other applications and environments in which the disclosed system could also be used. Other changes, substitutions, and alterations are possible without departing from the scope of the present invention, as defined by the following claims.

According to the present invention, video information from the image detector 12 may be compressed in the following manner in order to obtain compressed image information. This process could take place at image processing section 27 or at workstation 13 depending on the relative capacities of these computers. For this example this processing as well as the processing such as described with respect to FIGURE 2 are assumed to take place at image processing section 27. First, the image processing section 27 selects and saves a high-resolution video image provided by the image detector 12, which will thereafter serve as a reference image. For the sake of example, it is assumed here that the reference image is the reference image shown in FIGURE 2A. The image processing section 27 stores this reference image in a high-resolution format on the hard disk drive 34. For each subsequent video image produced by the image detector 12, the image processing section 27 carries out, relative to the saved reference image, processing which is analogous to that described above in association with FIGUREs 2B-2G.

The image processing section 27 then saves on the hard disk drive 34 a selected portion of the erode image of FIGURE 2G, namely the portion which represents a change from the reference image of FIGURE 2A. In other words, the image processing section 27 saves just the portion of the erode image of FIGURE 2G which corresponds to the person 41 (FIGURE 2B). Further, since the portion of the erode image of FIGURE 2G which is saved corresponds to a single color, the amount of memory required to save the selected portion of the erode image is substantially reduced over the amount of memory which would be required to save the same portion of the erode image in a gray scale format. In fact, since the portion of the image which is being saved corresponds to a single color (black or white), it is possible to store only an identification of this portion of the image, without any contrast information, or in other words without any gray scale or color information.

Thus, for each video image generated subsequent to the saved reference image, the image processing section 27 will carry out processing analogous to that described in association with FIGURES 2B to 2G, and then will save only an identification of the portion of the resulting erode image which represents differences from the saved reference image. The saved reference image, and the saved identification of a change or motion portion of each subsequent image, collectively represent compressed image information.

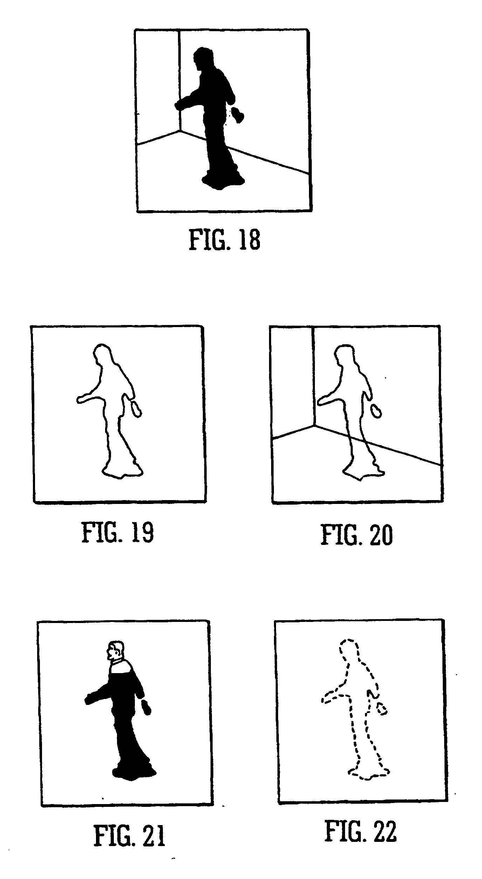

In order to uncompress and display this compressed image information, which is stored on the hard disk drive 34, the image processing section 27 would reconstruct each video image by displaying the saved reference image (which in this example is the reference image of FIGURE 2A), and by then overlaying on the reference image a region in a single solid color which is based on the saved information identifying a change region (which in this example was derived from the erode image of FIGURE 2G). The resulting reconstructed image could be displayed on the display 21 or workstation 13 as shown in FIGURE 18.

Since the compressed image information does not include gray scale or color information, except for the reference image, the person or other object will appear in the reconstructed image in a solid color such as black or white. Nevertheless, as successive images are reconstructed and displayed, it is possible to easily distinguish a person from some other object such as a briefcase, and to see the person walking or otherwise moving within the monitored area. In most cases, it is possible to determine with a relatively high degree of accuracy where the person went in the monitored area and what the person did. In many surveillance and/or security applications, this is more than adequate to satisfy the needs for which the system is provided.

As an example of the efficiency of this approach, consider a sequence of 243 frames or images, each of which has an uncompressed storage requirement of 16437 bytes. If the uncompressed, high-resolution information for every one of the 243 images was stored, it would require 243x16437 = 3,994,191 bytes to store the entire sequence. In contrast, if the first of the 243 images was stored at full resolution, it would require 16437 bytes. By then storing only an identification of the portions of the other 242 images which are different from the reference image, the total amount of storage required for the change regions from all of the 242 images might be about 47610 bytes. Thus, the total memory required for the entire sequence would be about 16437 + 47610 = 64047 bytes. The resulting compression ratio for this particular example is thus 62:1. Of course, the exact compression ratio will vary from situation to situation, depending on how many subsequent images are associated with a given reference image, and depending on the extent to which the images subsequent to the reference image differ from the reference image. If the differences with respect to the reference image are infrequent and minimal, as is often the case in a surveillance context, the amount of information stored will be very minimal, and the effective compression ratio will be very high.

The compression ratio discussed above can be further improved by supplementing the compression technique according to invention with certain known compression techniques. For example, the reference image could be JPEG compressed from 16437 bytes to 3068 bytes, and the information for the other 242 images could be Lempel-Ziv compressed from 47610 bytes to 20777 bytes, for a total of 3068 + 20777 = 23845 bytes for the entire 243 frame sequence. This represents an effective overall compression ratio of 170:1 with respect to the raw video data of 3,994,191 bytes.

As an alternative to saving the identification of the entire change region for an object, as discussed above in association with FIGURE 2G, it would be possible to save only a outline of this change region. For example, FIGURE 19 depicts the outline of the change region shown in FIGURE 2G. Existing MPEG-4 compression standards provide excellent efficiency in storing outlines. When a particular image from the compressed image information on the hard disk drive 34 is subsequently reconstructed, by overlaying the outline over the high-resolution reference image, it will appear as shown in FIGURE 20. There is no gray scale or color information for any particular object or person, but it is still possible from the displayed outline to readily distinguish a person from some other object such as a briefcase, and to determine where the person moves and what the person does.

As discussed above, there are many applications in which the change region for a person or other object can be adequately represented without saving contrast information such as color or gray scale information. However, there are a few applications in which it may be advantageous to provide contrast information (color or gray scale information) for a limited portion of the region of interest. For example, where an object of interest is a person, it may be desirable to have a gray scale or color image of the person's face. As discussed above, the image processing section 27 has the capability to make a determination of whether or not an object is a person. If it is determined that an object is a person, then the image processing section 27 can save gray scale or color information only as to an upper portion of the change region corresponding to that object, and can save only an identification of the remainder of the change region, without gray scale or color information. In the present example, this would result in saving the information which is shown in FIGURE 21. Since a portion of this information is a gray scale image, it will require more storage space than simply identifying the change region indicated by the erode image of FIGURE 2G, or the outline of this change region shown in FIGURE 19. Nevertheless, it will still require substantially less storage space than would be needed to save the entire video image, or to save just the change region with contrast information for the entire change region.

As still another variation, the image processing section 27 could save a high-resolution reference image, but then compare each subsequent image only to the image immediately before it. The information saved for the current image would represent only the differences from the immediately proceeding image, rather than all differences relative to the reference image. In the specific example shown in the drawings, if the person 41 in FIGURE 2B was slowly raising his right arm, but otherwise remaining motionless, the only difference between the current image and the immediately proceeding image would be some changes associated with movement of the right arm, for example as shown in solid lines in FIGURE 22. Obviously, the information required to define this change region is substantially less than the information that would be required to define the change region corresponding to the entire person. As a result, the overall amount of memory required to store the compressed image information is very small.

When this compressed image information is being reconstructed for display, a representation of the change region would be maintained in memory, and would be modified slightly as each successive image was decompressed for display. In the present example, the image of the change region being maintained in memory would at some point correspond generally to the region designated by broken lines in FIGURE 22. When the information corresponding to the solid lines in FIGURE 22 was retrieved, the image maintained in memory would be modified based on the information shown in solid lines, after which the display of the current image would be effected by displaying the reference image of FIGURE 2A and by then using the information maintained in memory to overlay on the displayed reference image a region corresponding to the broken lines in FIGURE 22, in order to obtain an overall image which would appear much like FIGURE 18.

As previously described, under certain circumstances, it may be necessary to periodically save a new reference image. For example, with reference to FIGURE 2A, a person may walk into the room, deposit a briefcase or other object, then walk out. Absent a new reference image, the briefcase would be detected indefinitely as a change region relative to the reference image, requiring the storage of a substantial amount of information over time, in an attempt to monitor an object which no longer needs to be observed or monitored. Accordingly, if the image processing section 27 determines that there is an existing difference from the reference image but that there has been no change in the current images for a predetermined period of time, for example five minutes, then at the end of this predetermined time interval the image processing section 27 saves a new reference image, and then analyzes all subsequently detected images relative to the new reference image rather than the original reference image.

The techniques described above all rely solely on the video images produced by the image detector 12, which is a video camera. As discussed above, the system 300 illustrated in FIGURE 14 may optionally include a further image detector 319, which in the disclosed embodiment is an infrared image detector. The image detectors 312 and 319 are, of course, appropriately aligned, so that the images detected by each are in alignment with each other. A video image from the image detector 312 would be selected and saved on the hard disk drive 34, to serve as a video reference image. At the same time, an infrared image from the image detector 319 would be temporarily saved within the computer 324 as an infrared reference image, but would not necessarily be stored on an not-illustrates hard disk drive as part of the compressed image information. Subsequent infrared images from the image detector 319 would then be compared to the reference infrared image, in a manner analogous to that described above for video images in association with FIGUREs 2A-2G. When infrared images are processed in this manner, the identified change regions are, of course, those corresponding to temperature differences, which most typically represent the presence of a human or animal, rather than some other type of object such as a briefcase.

Information identifying each detected change region in each infrared image is then stored on the hard disk drive. When the compressed image information is to be reconstructed, the saved reference image (which is a video image) is displayed, and then the saved information identifying the detected change region from the infrared image is used to reconstruct the change region and to overlay the change region on the reference video image. The resulting composite image will be very similar to the image shown in FIGURE 18.

The foregoing examples each discuss saving the compressed image information on the hard disk drive 34 of the image processing section 27. However, it will be recognized that the image processing section 27 could take some different action with this compressed image information. For example, the image processing section 27 could transmit the compressed image information across the network 14 to workstation 13, and the workstation 13 could then display the information on the display 21, and/or store the information on an non-illustrated hard disk drive.

The present invention provides a number of technical advantages. One such technical advantage is that the high-resolution reference image in the compressed image information provides a detailed context for surveillance, while the information saved from subsequent images provides high temporal resolution with the use of a relatively small number of bytes. The high temporal resolution permits a human to observe the reconstructed images, and to easily determine when a person is present in the monitored area, and what that person is doing. A further technical advantage is that decompression and display can be efficiently handled by a low-cost, general-purpose computer. Still another advantage is that the saved information which identifies change regions relative to the reference image contains sufficient information to permit automated motion analysis to be carried out using known techniques.

Although the foregoing disclosure presents several related techniques which are all encompassed by the present invention, it will be recognized that it is possible to make changes, substitutions and alterations in these techniques without departing from the scope of the present invention, as defined by the following claims.

## Claims

1. A method of monitoring an area of the type that periodically detects an image of the area comprising:
subtracting each detected image from a reference image, identifying a moving object by processing each change region where a current detected image differs from the reference image and defining an object image as a portion of the current detected image corresponding to each identified moving object,
**characterized in that** said method further comprises:
upon first identification of a moving object, saving the object image corresponding to the detected moving object;
for each subsequent detected image, automatically selecting a prior object image or a current object image of each detected moving object using selection criteria, saving the selected object image of each identified object, and discarding the non-selected object image of each identified moving object whereby a single object image of each corresponding moving object is saved.

2. The method according to Claim 1, **characterized in that** the method defines an object image of an identified object as a bounding box just large enough to include the corresponding change region,
wherein said selection criteria selects one of the prior object image or current object image whose bounding box has a lower side lower in said detected image.

3. The method according to Claim 2, **characterized in that** said selection criteria selects one of the prior object image or current object image having a larger size bounding box if the lower side of the bounding box of the prior object image is equally as low as the lower side of the bounding box of the current object image.

4. The method according to Claim 1, the improvement **characterized in that** said selection criteria selects one of the prior object image or current object image having a larger size corresponding change region.

5. The method according to any one of Claims 1 to 4, **characterized in that** said method automatically saves path information which identifies the path of movement of each detected moving object, and the method further comprises:
retaining the path information and the current selected object image after the moving object is no longer identified in the detected images; and
displaying the reference image having a path corresponding to the path information of a selected moving object overlain thereon and the stored object image of the selected moving object overlain thereon at a location corresponding to the moving object location when the stored object image was identified.

## Patentansprüche

1. Verfahren für die Überwachung eines Gebiets, bei dem periodisch ein Bild des Gebiets erfasst wird, das folgendes umfasst:
Subtraktion jedes erfassten Bildes von einem Referenzbild, Identifikation eines sich bewegenden Objekts durch das Verarbeiten jeder veränderten Region, in der ein aktuell erfasstes Bild vom Referenzbild abweicht, und Definition eines Objektbildes als Teil des aktuell erfassten Bildes, das jedem identifizierten sich bewegenden Objekt entspricht,
**dadurch gekennzeichnet, dass** das Verfahren ferner folgendes umfasst:
nach der ersten Identifizierung eines sich bewegenden Objekts erfolgende Speicherung des Objektbildes, das dem erfassten sich bewegenden Objekt entspricht;
für jedes nachfolgend erfasste Bild automatische Auswahl eines vorherigen Objektbildes oder eines aktuellen Objektbildes jedes erfassten sich bewegenden Objekts unter Verwendung von Auswahlkriterien, Speicherung des ausgewählten Objektbildes jedes identifizierten Objekts und Verwerfen des nicht ausgewählten Objektbildes jedes identifizierten sich bewegenden Objekts, wodurch ein einzelnes Objektbild jedes entsprechenden sich bewegenden Objekts gespeichert wird.

2. Verfahren gemäß Anspruch 1, **dadurch gekennzeichnet, dass** das Verfahren ein Objektbild eines identifizierten Objekts als Rahmen definiert, der gerade groß genug ist, um die entsprechende veränderte Region zu beinhalten,
wobei die Auswahlkriterien dasjenige des vorherigen Objektbilds oder des aktuellen Objektbilds auswählen, dessen Rahmenunterseite niedriger im erfassten Bild ist.

3. Verfahren gemäß Anspruch 2, **dadurch gekennzeichnet, dass** die Auswahlkriterien dasjenige des vorherigen Objektbilds oder des aktuellen Objektbilds auswählen, das einen größeren Rahmen aufweist, wenn die Unterseite des Rahmens des vorherigen Objektbildes genau so niedrig wie die Unterseite des Rahmens des aktuellen Objektbildes ist.

4. Verfahren gemäß Anspruch 1, bei dem die Verbesserung **dadurch gekennzeichnet ist, dass** die Auswahlkriterien dasjenige des vorherigen Objektbilds oder des aktuellen Objektbilds auswählen, dessen entsprechende veränderte Region größer ist.

5. Verfahren gemäß einem der Ansprüche 1 bis 4, **dadurch gekennzeichnet, dass** das Verfahren automatisch Bahninformationen speichert, die die Bewegungsbahn jedes erfassten sich bewegenden Objekts identifizieren, und dass das Verfahren ferner folgendes umfasst:
Beibehaltung der Bahninformationen und des aktuell ausgewählten Objektbildes, nachdem das sich bewegende Objekt nicht mehr in den erfassten Bildern zu identifizieren ist; und
Anzeige des Referenzbildes, in das eine Bahn, die den Bahninformationen eines ausgewählten Objekts entspricht, und ein gespeichertes Objektbild des ausgewählten sich bewegenden Objekts an einer Stelle eingeblendet sind, die der Stelle des sich bewegenden Objekts zu dem Zeitpunkt entspricht, als das gespeicherte Objektbild identifiziert wurde.

## Revendications

1. Procédé de surveillance d'une zone, du type qui détecte périodiquement une image de la zone, comprenant :
la soustraction de chaque image détectée d'une image de référence, l'identification d'un objet mobile par traitement de chaque région de modification, où une image actuelle détectée diffère de l'image de référence, et la définition d'une image de l'objet en tant que partie de l'image actuelle détectée, correspondant à chaque objet mobile identifié,
**caractérisé en ce que** ledit procédé comprend en outre :
lors de la première identification d'un objet mobile, la sauvegarde de l'image objet correspondant à l'objet mobile détecté;
pour chaque image suivante détectée, la sélection automatique est d'une image objet antérieure ou d'une image objet actuelle de chaque objet mobile détecté moyennant l'utilisation de critères de sélection, la sauvegarde de l'image objet détectée de chaque objet identifié, et l'élimination de l'image de l'objet non sélectionnée de chaque objet mobile identifié, ce qui permet de sauvegarder une seule image de chaque objet mobile correspondant.

2. Procédé selon la revendication 1, **caractérisé en ce que** le procédé définit l'image d'un objet identifié en tant que cadre limite juste suffisamment grand pour inclure la région de changement correspondante,
selon lequel lesdits critères de sélection sélectionnent l'une de l'image antérieure de l'objet ou de l'image actuelle de l'objet, dont le cadre limite possède un côté inférieur, qui est inférieur dans ladite image détectée.

3. Procédé selon la revendication 2, **caractérisé en ce que** lesdits critères de sélection sélectionnent l'une de l'image antérieure de l'objet ou de l'image actuelle de l'objet possédant un cadre limite de plus grande taille si le côté inférieur du cadre limite de l'image objet antérieure est également aussi bas que le côté inférieur du cadre limite de l'image actuelle de l'objet.

4. Procédé selon la revendication 1, le perfectionnement étant **caractérisé en ce que** ledit critère de sélection sélectionne l'une de l'image antérieure de l'objet ou de l'image actuelle de l'objet possédant une région de changement correspondante d'une taille supérieure.

5. Procédé selon l'une quelconque des revendications 1 à 5, **caractérisé en ce que** ledit procédé sauvegarde automatiquement une information de trajet qui identifie le trajet du mouvement de chaque objet mobile détecté, ledit procédé comprend en outre :
la conservation de l'information de trajet et de l'image actuelle de l'objet sélectionnée une fois que l'objet mobile n'est plus identifié dans les images détectées; et
l'affichage de l'image de référence possédant un trajet correspondant à l'information de trajet d'un objet mobile sélectionné en chevauchement sur l'image, et l'image mémorisée de l'objet mobile sélectionné en chevauchement sur l'image, en un emplacement correspondant à l'emplacement de l'objet mobile lorsque l'image de l'objet mémorisée était identifiée.
